(19) **Europäisches Patentamt**
**European Patent Office**
**Office européen des brevets**

(11) **EP 4 425 912 A1**

(12) **EUROPEAN PATENT APPLICATION**
published in accordance with Art. 153(4) EPC

(43) Date of publication:
**04.09.2024 Bulletin 2024/36**

(21) Application number: **22886611.7**

(22) Date of filing: **04.10.2022**

(51) International Patent Classification (IPC):
**H04N 7/18** (2006.01)   **G05D 1/02** (2020.01)
**G06T 7/20** (2017.01)

(52) Cooperative Patent Classification (CPC):
**G05D 1/02; G06T 7/20; H04N 7/18**

(86) International application number:
**PCT/JP2022/037139**

(87) International publication number:
**WO 2023/074279 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.10.2021   JP 2021177665**

(71) Applicants:
• **OMRON Corporation
Kyoto 600-8530 (JP)**
• **Kyoto University
Kyoto-shi, Kyoto 606-8501 (JP)**

(72) Inventors:
• **KUROSE NISHIMURA, Mai
Tokyo 113-0033 (JP)**
• **NOBUHARA, Shohei
Kyoto-shi, Kyoto 606-8501 (JP)**
• **NISHINO, Ko
Kyoto-shi, Kyoto 606-8501 (JP)**

(74) Representative: **SONN Patentanwälte GmbH & Co KG
Riemergasse 14
1010 Wien (AT)**

(54) **OVERVIEW DATA GENERATION DEVICE, OVERVIEW DATA GENERATION PROGRAM, OVERVIEW DATA GENERATION METHOD, AND ROBOT**

(57)   A bird's-eye view data generating device (20) comprises: an acquiring section (22) acquiring time-series data that is two-dimensional observation information expressing at least one moving body observed in a dynamic environment from a viewpoint of an observing moving body that is equipped with an observation device; and a generating section (26) generating bird's-eye view data, which expresses an on-ground locus of movement of the observing moving body and on-ground loci of movement of respective moving bodies that are obtained in a case in which the observing moving body is observed from a bird's-eye view position, from the time-series data of the two-dimensional observation information and by using a motion model, which is determined in advance and expresses motions of the moving bodies, and relative positions of the moving bodies from the observing moving body in an actual space, which relative positions are determined by using prior information, which relates to sizes of the moving bodies in an actual space, and sizes and positions of the moving bodies in the two-dimensional observation information.

EP 4 425 912 A1

# FIG.1

100

20

10

CAMERA

ACQUIRING
SECTION — 22

TRACKING
SECTION — 24

GENERATING
SECTION — 26

DESTINATION
INFORMATION

CONTROL
SECTION — 28

50

NOTIFICATION
SECTION

60

AUTONOMOUS
TRAVELING SECTION

**Description**

Technical Field

The present disclosure relates to a bird's-eye view data generating device, a bird's-eye view data generating program, a bird's-eye view data generating method, and a robot.

Background Art

There is conventionally known a technique of estimating the distribution of positions of persons as seen from a bird's-eye viewpoint, on the basis of skeletons of the persons that are observed in images captured from a first person viewpoint ("MonoLoco: Monocular 3D Pedestrian Localization and Uncertainty Estimation", searchable on the internet at <URL: https://arxiv.org/abs/1906.06059>, Jun 2019).

Further, there is known a technique of carrying out sequential optimization by adding moving bodies to targets of optimization in self-position estimation (Simultaneously Localization and Mapping: SLAM) that is based on a static landmark ("CubeSLAM:

Monocular 3D Object SLAM", searchable on the internet at <URL: https://arxiv.org/abs/1806.00557>, Jun 2018).

Moreover, techniques of estimating positions by GNSS (Global Navigation Satellite System) are known ("The Current State of and an Outlook on Field Robotics", searchable on the internet at <URL: https://committees.jsce.or.jp/opcet_sip/system/files/0130_01.pdf>).

Further, there is known a technique of estimating the position of capturing first person images within bird's-eye view images (Japanese Patent Application Laid-Open (JP-A) No. 2021-77287). This technique carries out comparison of motion characteristics extracted from both a bird's-eye viewpoint and a first person viewpoint, for the estimation.

SUMMARY OF INVENTION

Technical Problem

However, in the technique of the above "MonoLoco: Monocular 3D Pedestrian Localization and Uncertainty Estimation", searchable on the internet at <URL: https://arxiv.org/abs/1906.06059>, Jun 2019), the motion of the observing camera and the loci of movement of moving bodies at the periphery thereof cannot be reconstructed.

Further, the technique of the above "CubeSLAM: Monocular 3D Object SLAM", searchable on the internet at <URL: https://arxiv.org/abs/1806.00557>, Jun 2018 is applicable only to environments in which moving bodies as well as a static landmark can be observed stably. Further, the motion model for the moving bodies is limited to simple, rigid motions, and cannot handle motions of moving bodies that take interactions into consideration.

Further, in the technique of the above "The Current State of and an Outlook on Field Robotics", searchable on the internet at <URL:

https://committees.jsce.or.jp/opcet_sip/system/files/0130_01.pdf>), the subject thereof is only the reconstruction of the self-position of the device itself that is equipped with a GNSS, and positions of peripheral moving bodies cannot be reconstructed. Moreover, in environments in which blocking due to high-rise buildings or the like arises, the reception of GPS (Global Positioning System) radio waves is unstable, and the results of position reconstruction are inaccurate.

Further, the technique of above JP-A No. 2021-77287 cannot be applied to cases in which images from a bird's-eye viewpoint are not acquired.

The present disclosure was made in view of the above-described points, and an object thereof is to provide a bird's-eye view data generating device, a bird's-eye view data generating program, a bird's-eye view data generating method and a robot that, even in a situation in which a static landmark is not detected, can generate bird's-eye view data, which expresses the on-ground locus of movement of an observing moving body equipped with an observation device and on-ground loci of movement of respective moving bodies, from two-dimensional observation information that has been observed in a dynamic environment from the viewpoint of the observing moving body.

Solution to Problem

A first aspect of the present disclosure is a bird's-eye view data generating device comprising: an acquiring section acquiring time-series data that is two-dimensional observation information expressing at least one moving body observed in a dynamic environment from a viewpoint of an observing moving body that is equipped with an observation device; and a generating section generating bird's-eye view data, which expresses an on-ground locus of movement of the observing moving body and on-ground loci of movement of respective moving bodies that are obtained in a case in which the observing moving body is observed from a bird's-eye view position, from the time-series data of the two-dimensional observation information and by using a motion model, which is determined in advance and expresses motions of the moving bodies, and relative positions of the moving bodies from the observing moving body in an actual space, which relative positions are determined by using prior information, which relates to sizes of the moving bodies in an actual space, and sizes and positions of the moving bodies in the two-dimensional observation information.

In the above-described first aspect, the prior information is information relating to a distribution of sizes of the moving bodies in an actual space, and the generating section may generate the bird's-eye view data, which expresses the locus of movement expressing a distribution of on-ground positions of the observing moving body at respective times and the loci of movement expressing a distribution of on-ground positions of the respective moving bodies at respective times, from the time-series data of the two-dimensional observation information and by using a distribution of relative positions of the moving bodies from the observing moving body and the motion model that expresses a distribution of motions of the moving bodies.

In the above-described first aspect, the motion model may be a model expressing uniform motions of the moving bodies, or may be a model expressing motions corresponding to interactions between the moving bodies.

In the above-described first aspect, the bird's-eye view data generating device may further comprise a tracking section tracking the respective moving bodies from the time-series data of the two-dimensional observation information, and acquiring positions and sizes of the respective moving bodies at respective times in the two-dimensional observation information, wherein the generating section may generate the bird's-eye view data from positions and sizes of the respective moving bodies at respective times in the two-dimensional observation information acquired by the tracking section.

In the above-described first aspect, the generating section may generate the bird's-eye view data so as to maximize a posterior distribution of on-ground positions of the observing moving body and the respective moving bodies given on-ground positions of the observing moving body and the respective moving bodies of one time before, the posterior distribution being expressed by using the motion model and relative positions of the moving bodies from the observing moving body at respective times.

In the above-described first aspect, the generating section may generate the bird's-eye view data by alternately repeating fixing on-ground positions of the respective moving bodies, and estimating an on-ground position of the observing moving body and an observation direction of the observation device so as to optimize an energy cost function that expresses the posterior distribution, and fixing an on-ground position of the observing moving body and an observation direction of the observation device, and estimating on-ground positions of the respective moving bodies so as to optimize the energy cost function that expresses the posterior distribution.

In the above-described first aspect, under a condition that a static landmark is detected from the two-dimensional observation information, the generating section may generate the bird's-eye view data by using the static landmark shown in the two-dimensional observation information.

A second aspect of the disclosure is a bird's-eye view data generating program, and is a program for causing a computer to execute processing comprising: an acquiring step of acquiring time-series data that is two-dimensional observation information expressing at least one moving body observed in a dynamic environment from a viewpoint of an observing moving body that is equipped with an observation device; and a generating step of generating bird's-eye view data, which expresses an on-ground locus of movement of the observing moving body and on-ground loci of movement of respective moving bodies that are obtained in a case in which the observing moving body is observed from a bird's-eye view position, from the time-series data of the two-dimensional observation information and by using a motion model, which is determined in advance and expresses motions of the moving bodies, and relative positions of the moving bodies from the observing moving body in an actual space, which relative positions are determined by using prior information, which relates to sizes of the moving bodies in an actual space, and sizes and positions of the moving bodies in the two-dimensional observation information.

A third aspect of the disclosure is a bird's-eye view data generating method in which a computer executes processing comprising: an acquiring step of acquiring time-series data that is two-dimensional observation information expressing at least one moving body observed in a dynamic environment from a viewpoint of an observing moving body that is equipped with an observation device; and a generating step of generating bird's-eye view data, which expresses an on-ground locus of movement of the observing moving body and on-ground loci of movement of respective moving bodies that are obtained in a case in which the observing moving body is observed from a bird's-eye view position, from the time-series data of the two-dimensional observation information and by using a motion model, which is determined in advance and expresses motions of the moving bodies, and relative positions of the moving bodies from the observing moving body in an actual space, which relative positions are determined by using prior information, which relates to sizes of the moving bodies in an actual space, and sizes and positions of the moving bodies in the two-dimensional observation information.

A fourth aspect of the disclosure is a robot comprising: an acquiring section acquiring time-series data that is two-dimensional observation information expressing at least one moving body observed in a dynamic environment from a viewpoint of a robot that is equipped with an observation device; a generating section generating bird's-eye view data, which expresses an on-ground locus of movement of the robot and on-ground loci of movement of respective moving bodies that are obtained in a case in which the robot is observed from a bird's-eye view position, from the time-series data of the two-dimensional observation information and by using a motion model, which is determined in advance and expresses motions of the moving bodies, and relative positions of the moving bodies from the robot in an actual space, which relative positions are determined by using prior information, which relates to sizes of the moving bodies in an actual space, and sizes and positions of the moving bodies in the two-dimensional observation information; an autonomous traveling section causing the robot to travel autonomously; and a control section that, by using the bird's-eye view data, controls the autonomous traveling section such that the robot moves to a destination.

Advantageous Effects of Invention

In accordance with the present disclosure, even in a situation in which a static landmark is not detected, bird's-eye view data, which expresses the on-ground locus of movement of an observing moving body equipped with an observation device and on-ground loci of movement of respective moving bodies, can be generated from two-dimensional observation information that has been observed in a dynamic environment from the viewpoint of the observing moving body.

BRIEF DESCRIPTION OF DRAWINGS

Fig. 1 is a drawing illustrating the schematic structure of a robot relating to a first embodiment.
Fig. 2 is a drawing illustrating an example of an image captured by a camera.
Fig. 3 is a drawing illustrating an example of results of detecting persons from an image.
Fig. 4 is a drawing illustrating an example of bird's-eye view data.
Fig. 5 is a block drawing illustrating hardware structures of a bird's-eye view data generating device relating to the first embodiment and a second embodiment.
Fig. 6 is a flowchart illustrating the flow of bird's-eye view data generating processing that is carried out by the bird's-eye view data generating device relating to the first and second embodiments.
Fig. 7 is a drawing illustrating the schematic structure of an information processing terminal relating to the second embodiment.
Fig. 8 is an example of time-series data of images.
Fig. 9 is a drawing illustrating an example of bird's-eye view data.
Fig. 10 is an example of a distribution showing positions of respective persons.
Fig. 11 is a drawing illustrating an example of results of detecting persons from an image.

DESCRIPTION OF EMBODIMENTS

Examples of embodiments of the present disclosure are described hereinafter with reference to the drawings. Note that, in the respective drawings, the same reference numerals are applied to structural elements and portions that are the same or equivalent. Further, there are cases in which dimensions and ratios in the drawings are exaggerated for convenience of explanation, and there are cases in which they differ from actual ratios.

[First Embodiment]

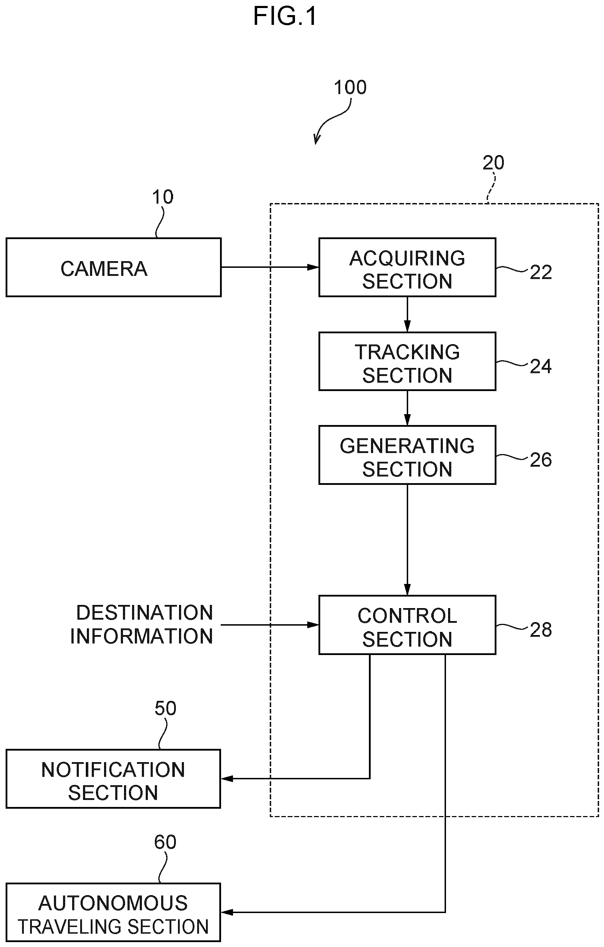

Fig. 1 is a drawing illustrating the schematic structure of robot 100 relating to a first embodiment of the present disclosure. As illustrated in Fig. 1, the robot 100 is provided with a camera 10, a bird's-eye view data generating device 20, a notification section 50 and an autonomous traveling section 60. The bird's-eye view data generating device 20 is provided with an acquiring section 22, a tracking section 24, a generating section 26 and a control section 28. Note that the robot 100 is an example of the observing moving body, and the camera 10 is an example of the observation device.

The camera 10 captures images of the periphery of the robot 100 at a predetermined interval and while moving from a start point to a destination, and outputs the captured images to the acquiring section 22 of the bird's-eye view data generating device 20. Note that the images are an example of two-dimensional observation information.

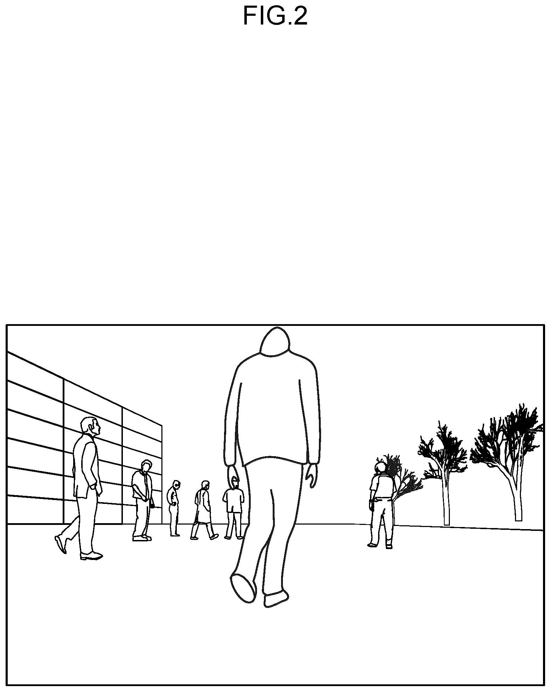

For example, images, which show at least one person who is observed from the viewpoint of the robot 100 in a dynamic environment, are captured by the camera 10 (see Fig. 2).

A perspective projection RGB camera may be used as the camera 10, or a fisheye camera or a 360° camera may be used.

The acquiring section 22 acquires time-series data of the images captured by the camera 10.

The tracking section 24 tracks respective persons from the acquired time-series data of the images, and acquires the position and the size at each time of each person in an image.

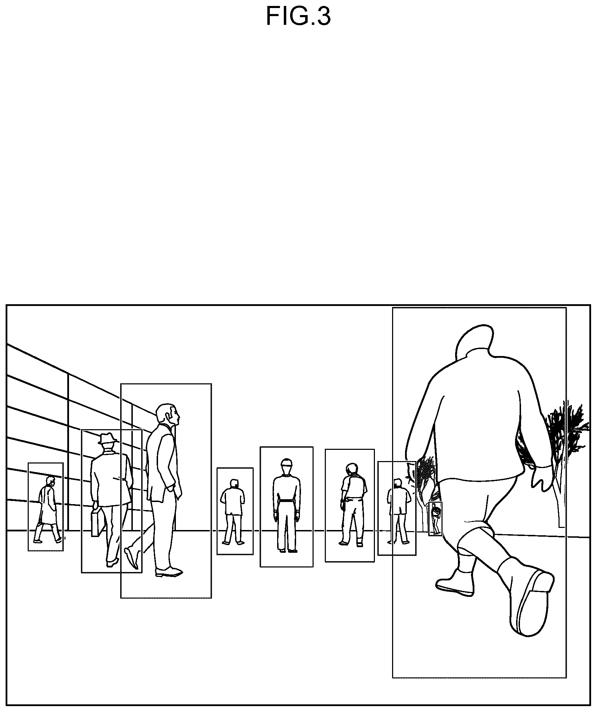

For example, as illustrated in Fig. 3, for each of the persons in the image, a bounding box that expresses that person is detected and tracked. The central positions (the central positions of the bounding boxes) and the heights (the heights of the bounding boxes) of the persons in the image are acquired at each time.

From the time-series data of the images, the generating section 26 generates bird's-eye view data expressing the on-ground locus of movement of the robot 100 and the on-ground loci of movement of the respective persons, which are obtained in a case in which the robot 100 is observed from a bird's-eye view position. At this time, the generating section 26 generates the bird's-eye view data by using a motion model that is determined in advance and expresses a distribution of motions of persons, and a distribution of relative positions of persons from the robot 100 in an actual space which relative positions are determined by using prior information, which relates to sizes of persons in an actual space, and the sizes and positions of the respective persons in the images.

Specifically, the prior information relating to sizes of persons in an actual space relates to the distribution of sizes of persons in an actual space, and the motion model is a model expressing uniform motions of persons or is a model expressing motions corresponding to interactions between persons. Further, the generating section 26 generates the bird's-eye view data so as to maximize a posterior distribution that is expressed by using the relative positions of persons from the robot 100 at each time and the motion model. The posterior distribution is a posterior distribution of the on-ground positions of the robot 100 and the respective persons, given the on-ground positions of the robot 100 and the respective persons of one time before, and the positions and sizes of the respective persons in the image of the current time, having been provided.

Maximizing of the above-described posterior distribution is expressed by the following formula.

$$\hat{\mathcal{X}}_{0:K}^{t} = \arg\max_{\mathcal{X}_{0:K}^{t}} p(\mathcal{X}_{0:K}^{t}|\mathcal{X}_{0:K}^{t-1})p(\mathcal{Z}_{1:K}^{t}|\mathcal{X}_{1:K}^{t},\mathcal{X}_{0:K}^{t-1})$$

Here, $^{\wedge}X_{0:K}^{t}$ represents the on-ground positions of the robot 100 and the respective persons at time t. $X_{1:K}^{1}$ represents the on-ground positions of the respective persons at time t. $Z_{1:K}^{t}$ represents the relative positions of the respective persons from the robot 100 at time t. Note that variable X to which the circumflex (^) is applied in the formulas is written as ^X in the specification.

In the present embodiment, as an example, the generating section 26 alternately repeats (A) fixing the on-ground positions of the respective persons, and estimating the on-ground position of the robot 100 and the observation direction of the camera 10 so as to minimize an energy cost function that expresses the aforementioned posterior distribution, and (B) fixing the on-ground position of the robot 100 and the observation direction of the camera 10, and estimating the on-ground positions of the respective persons so as to minimize the energy cost function expressing the posterior distribution. The generating section 26 thereby generates bird's-eye view data.

The minimizing of the energy cost function at the time of estimating the on-ground position of the robot 100 and the observation direction of the camera 10 is expressed by following formula (1). Further, the minimizing of the energy cost function at the time of estimating the on-ground positions of the respective persons is expressed by following formula (2).

$$\min_{\Delta \boldsymbol{x}_0^t \in \mathbb{R}^3} \mathcal{E}_c \left( \Delta \boldsymbol{x}_0^t; \hat{\mathcal{X}}_{1:K}^t, \mathcal{Z}_{1:K}^t, \mathcal{X}_{0:K}^{t-\tau:t-1} \right),$$

$$(1)$$

$$\text{subject to } \hat{\mathcal{X}}^t_{1:K} = \underset{\mathcal{X}^t_{1:K}}{\mathrm{argmin}}\, \mathcal{E}_p\left(\mathcal{X}^t_{1:K}; \Delta \hat{x}^t_0, \mathcal{Z}^t_{1:K}, \mathcal{X}^{t-\tau:t-1}_{0:K}\right)$$

$$(2)$$

Here, $\Delta x^t_0$ represents the amount of change in the on-ground position of the robot 100 and the amount of change in the observation direction of the camera 10 from the one time before which is t-1, at time t. $X_{0:K}^{t-\tau:t-1}$ represents the on-ground positions of the robot 100 and the respective persons at each time from time t-$\tau$ to time t-1.

Here, energy cost function $\varepsilon_C$ is expressed by the following formula.

$$\mathcal{E}_c\left(\Delta x^t_0; \hat{\mathcal{X}}^t_{1:K}, \mathcal{Z}^t_{1:K}, \mathcal{X}^{t-\tau:t-1}_{1:K}\right) = -\ln p\left(x^t_0 | \mathcal{X}^{t-\tau:t-1}_0\right) + \mathcal{E}_p,$$

In the present embodiment, as an example, the energy cost function is derived by calculating the negative logarithm of the posterior distribution.

Further, the motion model is a model expressing uniform motions, and the first term in the above formula is expressed by the following formula, given that $\tau = 2$ and the robot 100 or the person is k.

$$p\left(x^t_k | \mathcal{X}^{t-2:t-1}_k\right) \sim \exp\left[-\|x^t_k - 2x^{t-1}_k + x^{t-2}_k\|^2\right].$$

If k = 0, $x^t_0$ represents the on-ground position of the robot 100 and the observation direction of the camera 10 at time t. If k = 1 ~ K, $x^t_k$ represents the on-ground position of person k at time t.

Further, relative position $z^t_k$ of the kth person with respect to the camera 10 at time t follows Gaussian distribution as shown by the following formula.

$$z^t_k \sim p\left(z^t_k | x^t_k; h_k\right) = \mathcal{N}\left(\mu_h, \sigma^2_h\right),$$

Here, $h_k$ is the height of the person in the actual space, $\mu_h$ represents the average, and $\sigma_h^2$ represents the dispersion.

Further, the motion model is a model expressing motions corresponding to interactions between persons, and the first term of the above formula is expressed by the following formula.

$$p\left(\mathcal{X}^t_{1:K} | \mathcal{X}^{t-2:t-1}_{1:K}\right) = \prod_{k=1}^{K} p\left(x^t_k | \mathcal{X}^{t-2:t-1}_k\right).$$

Further, the second term of the above energy cost function $\varepsilon_C$ is expressed by the following formula.

$$\mathcal{E}_p = \sum_{k=1}^{K} -\ln p(\boldsymbol{x}_k^t | \mathcal{X}_k^{t-2:t-1}) + \sum_{k=1}^{K} -\ln p(\boldsymbol{z}_k^t | \boldsymbol{x}_k^t, \Delta \boldsymbol{x}_0^t).$$

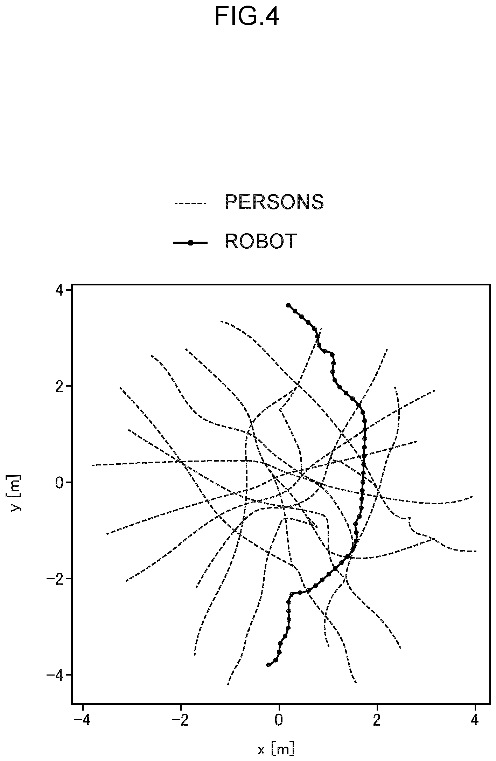

The generating section 26 generates bird's-eye view data such as illustrated in Fig. 4 for example. Fig. 4 illustrates an example showing the on-ground locus of movement of the robot 100 by the line that connects the black dots, and showing the on-ground loci of movement of the robot 100 by the dashed lines.

By using the bird's-eye view data, the control section 28 controls the autonomous traveling section 60 such that the robot 100 moves to the destination. For example, the control section 28 designates the moving direction and the speed of the robot 100, and controls the autonomous traveling section 60 such that the robot 100 moves in the designated moving direction and at the designated speed.

Further, by using the bird's-eye view data, in a case in which it is judged that an intervening action is necessary, the control section 28 controls the notification section 50 to output a voice message such as "Please clear the way." or to emit a warning noise.

Hardware structures of the bird's-eye view data generating device 20 of the robot 100 are described next.

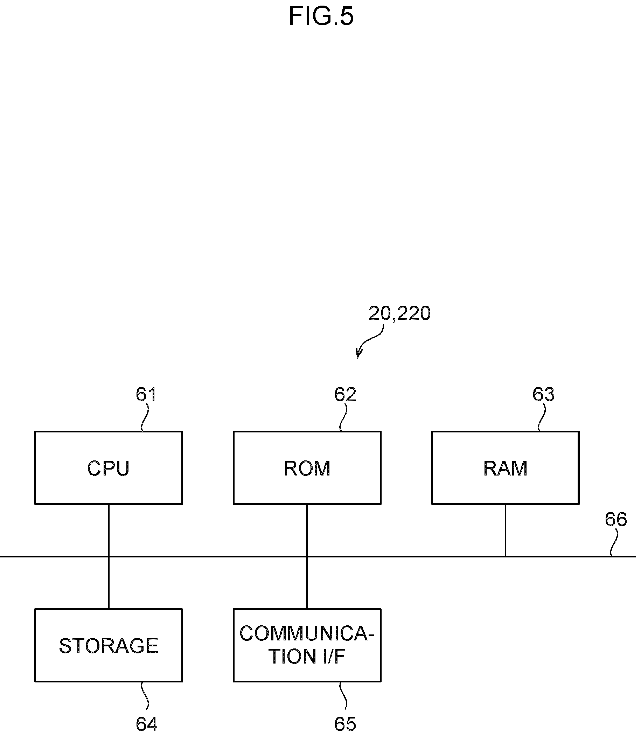

As illustrated in Fig. 5, the bird's-eye view data generating device 20 has a CPU (Central Processing Unit) 61, a ROM (Read Only Memory) 62, a RAM (Random Access Memory) 63, a storage 64, and a communication interface (I/F) 65. These respective structures are connected so as to be able to communicate with one another via bus 66.

In the present embodiment, a bird's-eye view data generating program is stored in the storage 64. The CPU 61 is a central computing processing unit, and executes various programs and controls respective structures. Namely, the CPU 61 reads-out programs from the storage 64, and executes programs by using the RAM 63 as a workspace. The CPU 61 carries out control of the above-described respective structures, and various computing processings, in accordance with programs recorded in the storage 64.

The ROM 62 stores various programs and various data. The RAM 63 temporarily stores programs and data as a workspace. The storage 64 is structured by an HDD (Hard Disk Drive) or an SSD (Solid State Drive), and stores various programs, including the operating system, and various data.

The communication interface 65 is an interface for communicating with other devices, and standards such as, for example, Ethernet®, FDDI, Wi-Fi® or the like are used.

Operation of the robot 100 is described next.

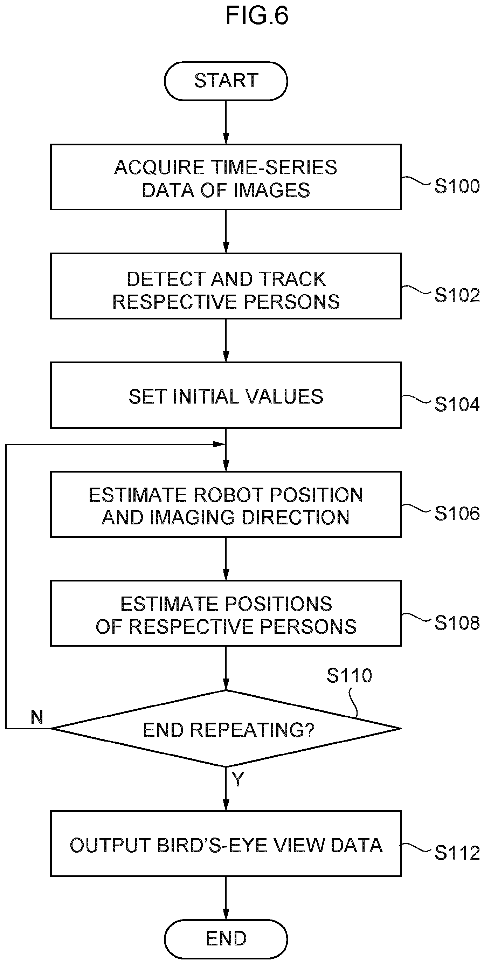

At the time when the robot 100 moves to its destination by the autonomous traveling section 60, the camera 10 captures images of the periphery of the robot 100 at a predetermined interval. Further, periodically, the bird's-eye view data generating device 20 generates bird's-eye view data by the bird's-eye view data generating processing illustrated in Fig. 6, and, on the basis of the bird's-eye view data, controls the autonomous traveling section 60 such that the robot 100 moves to the destination.

Fig. 6 is a flowchart illustrating the flow of bird's-eye view data generating processing that is carried out by the bird's-eye view data generating device 20. The bird's-eye view data generating processing is carried out due to the CPU 61 reading-out the bird's-eye view data generating program from the storage 64 and expanding and executing the program in the RAM 63.

In step S100, as the acquiring section 22, the CPU 61 acquires time-series data of the images captured by the camera 10.

In step S102, as the tracking section 24, the CPU 61 tracks the respective persons from the acquired time-series data of the images, and acquires the positions and the sizes at respective times of the respective persons in the images.

In step S104, as the generating section 26, the CPU 61 sets an initial value for each of the on-ground position of the robot 100, the observation direction of the camera 10, and the on-ground positions of the respective persons, for each time of the acquired time-series data of the images.

In step S106, as the generating section 26 and in accordance with above formula (1), the CPU 61 fixes the on-ground positions of the respective persons, and estimates the on-ground position of the robot 100 and the observing direction of the camera 10 so as to optimize the energy cost function expressing the above-described posterior distribution.

In step S108, as the generating section 26 and in accordance with above formula (2), the CPU 61 fixes the on-ground position of the robot 100 and the observation direction of the camera 10, and estimates the on-ground positions of the respective persons so as to optimize the energy cost function expressing the above-described posterior distribution.

In step S110, as the generating section 26, the CPU 61 judges whether or not a repeat end condition that is determined in advance is satisfied. For example, it suffices to use the number of times of repeating reaching a maximum number of times, the value of the energy cost function converging, or the like as the repeat end condition. If the repeat end condition is satisfied, the CPU 61 moves on to step S112. On the other hand, if the repeat end condition is not satisfied, the CPU 61 returns to step S106.

In step S112, as the generating section 26, the CPU 61 generates bird's-eye view data that expresses the on-ground position of the robot 100, the observation direction of the camera 10 and the on-ground positions of the respective persons for each time that were obtained ultimately, and outputs the data to the control section 28, and ends the bird's-eye view data generating processing.

By using the generated bird's-eye view data, the control section 28 designates the moving direction and speed of the robot 100 so that the robot 100 will move to the destination, and controls the autonomous traveling section 60 such that the robot 100 moves in the designated moving direction and at the designated speed. Further, in a case in which it is judged, by using the bird's-eye view data, that an intervening behavior is necessary, the control section 28 controls the notification section 50 to output a voice message such as "Please clear the way." or to emit a warning noise.

In this way, in the present embodiment, time-series data of images, which show at least one person observed in a dynamic environment from the viewpoint of the robot 100 that is equipped with the camera 10, is acquired. Bird's-eye view data, which expresses the on-ground locus of movement of the robot 100 and the on-ground loci of movement of the respective persons, is generated from the time-series data of the images by using a motion model that is determined in advance and expresses motions of persons, and the relative positions of the persons from the robot 100 in an actual space which relative positions are determined by using prior information, which relates to sizes of persons in an actual space, and the sizes and positions of the persons in the images. Due thereto, even in a situation in which a static landmark is not detected, bird's-eye view data, which expresses the on-ground locus of movement of the robot 100 that is equipped with the camera 10 and the on-ground loci of movement of the respective persons, can be generated from images observed in a dynamic environment from the viewpoint of the robot 100.

[Second Embodiment]

A bird's-eye view data generating device relating to a second embodiment is described next. Note that portions that are structured similarly to the first embodiment are denoted by the same reference numerals, and detailed description thereof is omitted.

The second embodiment describes, as an example, a case in which the bird's-eye view data generating device is provided at an information processing terminal that is held by a user.

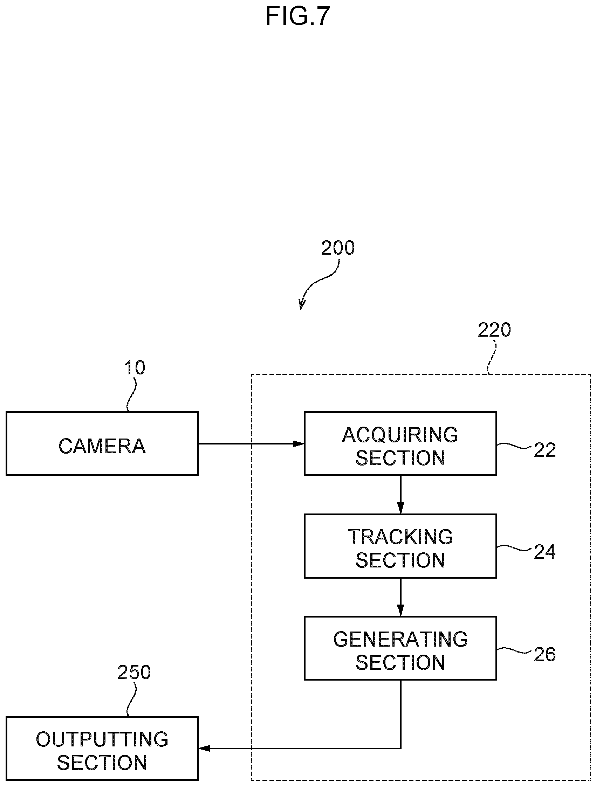

Fig. 7 is a drawing illustrating the schematic structure of information processing terminal 200 relating to the second embodiment of the present disclosure. As illustrated in Fig. 7, the information processing terminal 200 has the camera 10, a bird's-eye view data generating device 220 and an outputting section 250. The bird's-eye view data generating device 220 has the acquiring section 22, the tracking section 24 and the generating section 26. Note that the user is an example of the observing moving body, and the camera 10 is an example of the observation device.

The information processing terminal 200 is held directly by a user, or is installed in a held object (e.g., a suitcase) that a user holds.

The camera 10 captures images of the periphery of the user at a predetermined interval, and outputs the captured images to the acquiring section 22 of the bird's-eye view data generating device 220.

From the time-series data of the images, the generating section 26 generates bird's-eye view data expressing the on-ground locus of movement of the user and the on-ground loci of movement of the respective persons, which are obtained in a case in which the user is observed from a bird's-eye view position, and outputs the data to the outputting section 250. At this time, the generating section 26 generates the bird's-eye view data by using a motion model that is determined in advance and expresses motions of persons, and relative positions of persons from the user in an actual space which are determined by using by using prior information, which relates to the sizes of the persons in an actual space, and the sizes and positions of the respective persons in the images.

The outputting section 250 presents the generated bird's-eye view data to the user, or transmits the bird's-eye view data to a server (not illustrated) via the internet.

Further, the bird's-eye view data generating device 220 has hardware structures that are similar to those of the bird's-eye view data generating device 20 of the above-described first embodiment, as illustrated in Fig. 5.

Note that, because the other structures and the operation of the bird's-eye view data generating device 220 are similar to those of the first embodiment, description thereof is omitted.

In this way, in the present embodiment, time-series data of images, which show at least one person observed in a dynamic environment from the viewpoint of a user holding the information processing terminal 200 that has the camera 10, is acquired. Bird's-eye view data, which expresses the on-ground locus of movement of the user and the on-ground loci of movement of the respective persons, is generated from the time-series data of the images by using a motion model that is determined in advance and expresses motions of persons, and the relative positions of persons from the user in an actual space, which relative positions are determined by using prior information, which relates to the sizes of the persons in an actual space, and the sizes and positions of the persons in the images. Due thereto, even in a situation in which a static landmark is not detected, bird's-eye view data, which expresses the on-ground locus of movement of a user and the on-ground loci of movement of respective persons, can be generated from images observed in a dynamic environment from the viewpoint of the user who holds the information processing terminal 200 having the camera 10.

The present disclosure can be applied to automatic driving vehicles as well. In this case, the observing moving body is the automatic driving vehicle, the observation device is a camera, a laser radar or a millimeter wave radar, and the moving bodies are other vehicles, motorcycles, pedestrians and the like.

[Example]

An Example of generating bird's-eye view data from time-series data of images by the bird's-eye view data generating device 20 of the above-described first embodiment is described.

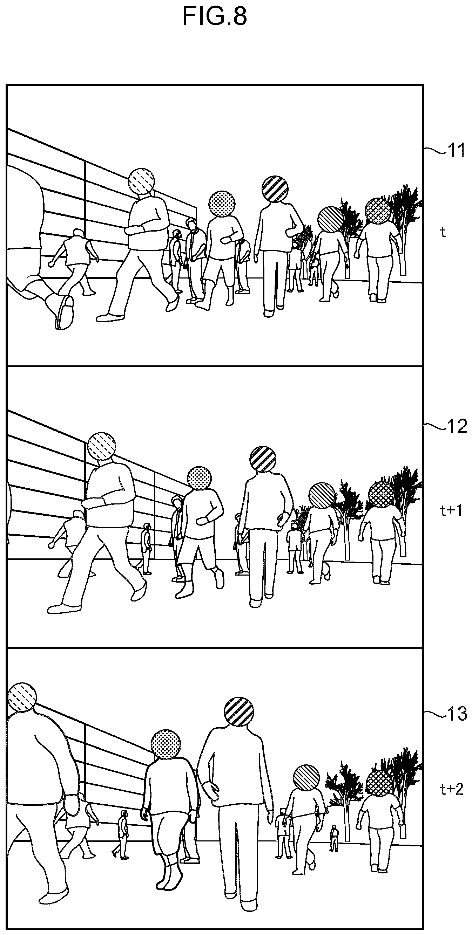

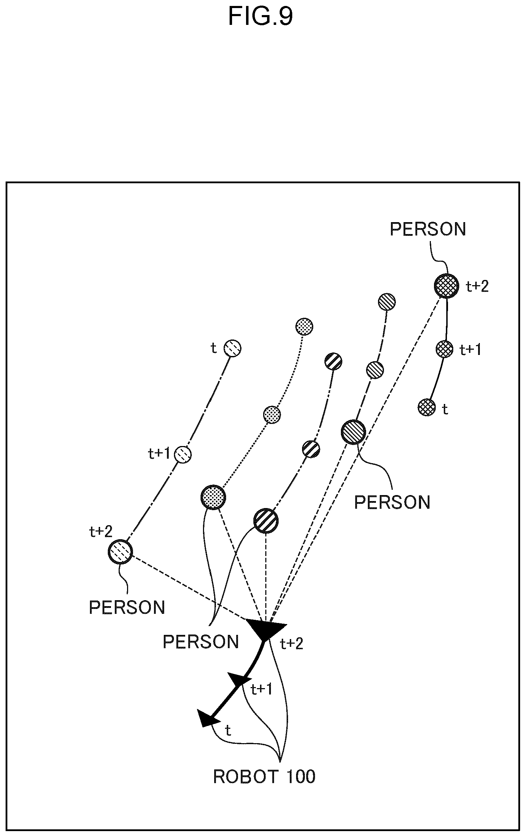

In the present Example, time-series data of images captured in a crowded environment such as that illustrated in Fig. 8 is used as input. Fig. 8 illustrates an example in which time-series data, which is formed from images 11, 12, 13 of times t, t+1, t+2, is used as the input. At this time, bird's-eye view data such as that illustrated in Fig. 9 is generated by the bird's-eye view data generating device 20. Fig. 9 illustrates an example in which the bird's-eye view data shows on-ground positions of the robot 100 and the respective persons at times t, t+1, t+2.

[Modified Examples]

The above embodiments describe cases in which the robot 100 or the information processing terminal 200 has the bird's-eye view data generating device 20, 220, but the functions of the bird's-eye view data generating device 20, 220 may be provided at an external server. In this case, the robot 100 or the information processing terminal 200 transmits the time-series data of the images captured by the camera 10 to the external server. The external server generates bird's-eye view data from the transmitted time-series data of the images, and transmits the data to the robot 100 or the information processing terminal 200.

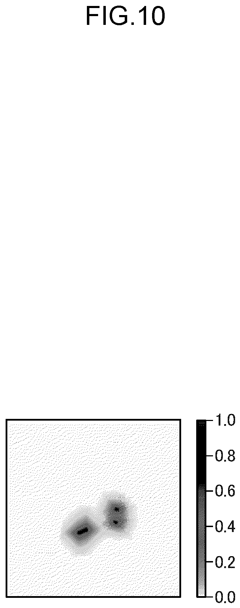

Further, in the bird's-eye view data, the position of the robot 100 or the user and the positions of the respective persons at each time may be expressed as a probability distribution such as that illustrated in Fig. 10. In this case, from the time-series data of the images, the generating section 26 generates bird's-eye view data expressing the locus of movement, which shows the distribution of the on-ground position of the robot 100 or the user at each time, and loci of movement, which show the distribution of the on-ground positions of the respective persons at each time.

Further, under the condition that a static landmark is detected from the images captured by the camera 10, the generating section 26 may generate bird's-eye view data by using the static landmark expressed by the images. For example, the technique of the above-described "CubeSLAM: Monocular 3D Object SLAM", searchable on the internet at <URL: https://arxiv.org/abs/1806.00557>, Jun 2018 may be used. In this case, under the condition that a static landmark is detected from images captured by the camera 10, the bird's-eye view data may be generated by using the static landmark expressed by the images, and, under the condition that a static landmark is not detected from images captured by the camera 10 (e.g., in a crowded environment), the bird's-eye view data may be generated by the method described in the above embodiments. Further, bird's-eye view data that is generated by using a static landmark expressed by the images, and bird's-eye view data that is generated by the method described in the above embodiments, may be integrated.

Further, a case using a model prescribed by mathematical formulas as the motion model has been described as an example, but the present disclosure is not limited to this. A DNN (Deep Neural Network) model that has been trained in advance may be used as the motion model. For example, a DNN model, which uses relative positions of the respective persons at the periphery as input and outputs the position of a target person in the step of the next time, may be used as the motion model.

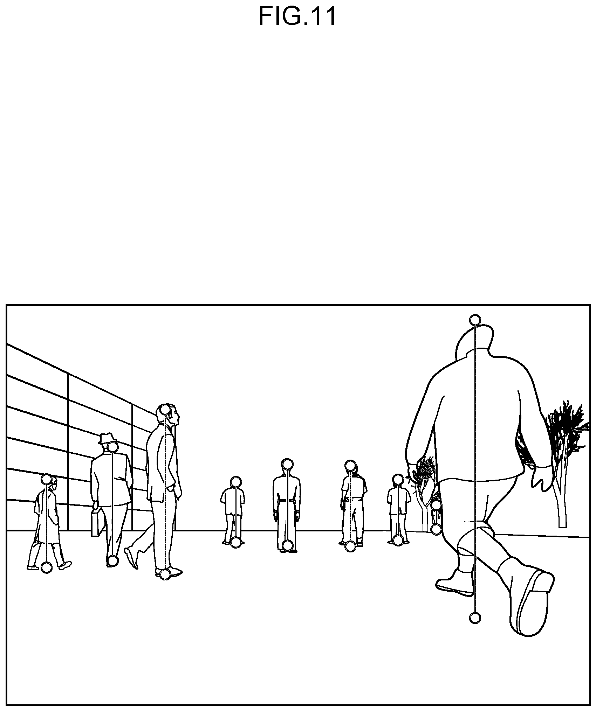

Further, as an example, a case has been described in which, for each of the persons in the images, the tracking section 24 detects and tracks bounding boxes expressing the persons, and acquires the central positions (the central positions of the bounding boxes) and the heights (the heights of the bounding boxes) of the persons in the images at each time. However, the present disclosure is not limited to this. For example, for each of the respective persons in the images, the tracking section 24 may detect and track the skeleton of a person that represents that person, and the central position (the central position of the skeleton of the person) and the height (the height of the skeleton of the person) of the person in the images may be acquired at each time. Further, as illustrated in Fig. 11, for each of the respective persons in the images, the tracking section 24 may detect and track a line expressing a height that represents that person, and the central position (the central position of the line) and the height (the height of the line) of the person in the images may be acquired at each time.

Further, a case in which the two-dimensional observation information is images has been described as an example, but the present disclosure is not limited to this. For example, if the observation device is an event camera, for each pixel, data having a pixel value corresponding to motion may be used as the two-dimensional observation information.

Further, a case in which the moving body that is expressed by the bird's-eye view data is a person has been described as an example, but the present disclosure is not limited to this. For example, the moving body expressed by the bird's-eye view data may be a personal transporter such as a bicycle, a vehicle or the like.

Further, the bird's-eye view data generating processing, which is executed by the CPU reading-in software (a program) in the above-described respective embodiments, may be executed by any of various types of processors other than a CPU. Examples of processors in this case include PLDs (Programmable Logic Devices) whose circuit structure can be changed after production such as FPGAs (Field-Programmable Gate Arrays) and the like, and dedicated electrical circuits that are processors having circuit structures that are designed for the sole purpose of executing specific processings such as ASICs (Application Specific Integrated Circuits) and the like, and the like. Further, the bird's-eye view data generating processing may be executed by one of these various types of processors, or may be executed by a combination of two or more of the same type or different types of processors, e.g., plural FPGAs, or a combination of a CPU and an FPGA, or the like. Further, the hardware structures of these various types of processors are, more specifically, electrical circuits that combine circuit elements such as semiconductor elements and the like.

Further, the above embodiments describe an aspect in which the bird's-eye view data generating program is stored in advance in the storage 64, but the present disclosure is not limited to this. The program may be provided in a form of being recorded on a recording medium such as a CD-ROM (Compact Disc Read Only Memory), a DVD-ROM (Digital Versatile Disc Read Only Memory), a USB (Universal Serial Bus) memory or the like. Further, the program may be in a form of being downloaded from an external device over a network.

(Notes)

The following notes are further disclosed in relation to the above-described embodiments.

(Note 1)

A bird's-eye view data generating device comprising:

a memory; and
at least one processor connected to the memory,
wherein the processor:

acquires time-series data that is two-dimensional observation information expressing at least one moving body observed in a dynamic environment from a viewpoint of an observing moving body that is equipped with an observation device; and
generates bird's-eye view data, which expresses an on-ground locus of movement of the observing moving body and on-ground loci of movement of respective moving bodies that are obtained in a case in which the observing moving body is observed from a bird's-eye view position, from the time-series data of the two-dimensional observation information and by using a motion model, which is determined in advance and expresses motions of the moving bodies, and relative positions of the moving bodies from the observing moving body in an actual space, which relative positions are determined by using prior information, which relates to sizes of the moving bodies in an actual space, and sizes and positions of the moving bodies in the two-dimensional observation information.

(Note 2)

A non-transitory storage medium storing a program executable by a computer so as to execute a bird's-eye view data generating processing,
the bird's-eye view data generating processing:

acquiring time-series data that is two-dimensional observation information expressing at least one moving body observed in a dynamic environment from a viewpoint of an observing moving body that is equipped with an observation device; and
generating bird's-eye view data, which expresses an on-ground locus of movement of the observing moving body and on-ground loci of movement of respective moving bodies that are obtained in a case in which the observing moving body is observed from a bird's-eye view position, from the time-series data of the two-dimensional observation information and by using a motion model, which is determined in advance and expresses motions of the moving bodies, and relative positions of the moving bodies from the observing moving body in an actual space, which relative positions are determined by using prior information, which relates to sizes of the moving bodies in an actual space, and sizes and positions of the moving bodies in the two-dimensional observation information.

The disclosure of Japanese Patent Application No. 2021-177665 is, in its entirety, incorporated by reference into the present specification.

All publications, patent applications, and technical standards mentioned in the present specification are incorporated by reference into the present specification to the same extent as if such individual publication, patent application, or technical standard was specifically and individually indicated to be incorporated by reference.

**Claims**

1. A bird's-eye view data generating device comprising:

   an acquiring section acquiring time-series data that is two-dimensional observation information expressing at least one moving body observed in a dynamic environment from a viewpoint of an observing moving body that is equipped with an observation device; and
   a generating section generating bird's-eye view data, which expresses an on-ground locus of movement of the observing moving body and on-ground loci of movement of respective moving bodies that are obtained in a case in which the observing moving body is observed from a bird's-eye view position, from the time-series data of the two-dimensional observation information and by using a motion model, which is determined in advance and expresses motions of the moving bodies, and relative positions of the moving bodies from the observing moving body in an actual space, which relative positions are determined by using prior information, which relates to sizes of the moving bodies in an actual space, and sizes and positions of the moving bodies in the two-dimensional observation information.

2. The bird's-eye view data generating device of Claim 1, wherein:

   the prior information is information relating to a distribution of sizes of the moving bodies in an actual space, and
   the generating section generates the bird's-eye view data, which expresses the locus of movement expressing a distribution of on-ground positions of the observing moving body at respective times and the loci of movement expressing a distribution of on-ground positions of the respective moving bodies at respective times, from the time-series data of the two-dimensional observation information and by using a distribution of relative positions of the moving bodies from the observing moving body and the motion model that expresses a distribution of motions of the moving bodies.

3. The bird's-eye view data generating device of Claim 1 or Claim 2, wherein the motion model is a model expressing uniform motions of the moving bodies, or is a model expressing motions corresponding to interactions between the moving bodies.

4. The bird's-eye view data generating device of any one of Claim 1 through Claim 3, further comprising a tracking section tracking the respective moving bodies from the time-series data of the two-dimensional observation information, and acquiring positions and sizes of the respective moving bodies at respective times in the two-dimensional observation information,
   wherein the generating section generates the bird's-eye view data from positions and sizes of the respective moving bodies at respective times in the two-dimensional observation information acquired by the tracking section.

5. The bird's-eye view data generating device of any one of Claim 1 through Claim 4, wherein the generating section generates the bird's-eye view data so as to maximize a posterior distribution of on-ground positions of the observing moving body and the respective moving bodies given on-ground positions of the observing moving body and the respective moving bodies of one time before, the posterior distribution being expressed by using the motion model and relative positions of the moving bodies from the observing moving body at respective times.

6. The bird's-eye view data generating device of Claim 5, wherein the generating section generates the bird's-eye view data by alternately repeating:

   fixing on-ground positions of the respective moving bodies, and estimating an on-ground position of the observing moving body and an observation direction of the observation device so as to optimize an energy cost function that expresses the posterior distribution, and

fixing an on-ground position of the observing moving body and an observation direction of the observation device, and estimating on-ground positions of the respective moving bodies so as to optimize the energy cost function that expresses the posterior distribution.

7. The bird's-eye view data generating device of any one of Claim 1 through Claim 6, wherein, under a condition that a static landmark is detected from the two-dimensional observation information, the generating section generates the bird's-eye view data by using the static landmark expressed by the two-dimensional observation information.

8. A bird's-eye view data generating program for causing a computer to execute processing comprising:

an acquiring step of acquiring time-series data that is two-dimensional observation information expressing at least one moving body observed in a dynamic environment from a viewpoint of an observing moving body that is equipped with an observation device; and

a generating step of generating bird's-eye view data, which expresses an on-ground locus of movement of the observing moving body and on-ground loci of movement of respective moving bodies that are obtained in a case in which the observing moving body is observed from a bird's-eye view position, from the time-series data of the two-dimensional observation information and by using a motion model, which is determined in advance and expresses motions of the moving bodies, and relative positions of the moving bodies from the observing moving body in an actual space, which relative positions are determined by using prior information, which relates to sizes of the moving bodies in an actual space, and sizes and positions of the moving bodies in the two-dimensional observation information.

9. A bird's-eye view data generating method in which a computer executes processing comprising:

an acquiring step of acquiring time-series data that is two-dimensional observation information expressing at least one moving body observed in a dynamic environment from a viewpoint of an observing moving body that is equipped with an observation device; and

a generating step of generating bird's-eye view data, which expresses an on-ground locus of movement of the observing moving body and on-ground loci of movement of respective moving bodies that are obtained in a case in which the observing moving body is observed from a bird's-eye view position, from the time-series data of the two-dimensional observation information and by using a motion model, which is determined in advance and expresses motions of the moving bodies, and relative positions of the moving bodies from the observing moving body in an actual space, which relative positions are determined by using prior information, which relates to sizes of the moving bodies in an actual space, and sizes and positions of the moving bodies in the two-dimensional observation information.

10. A robot comprising:

an acquiring section acquiring time-series data that is two-dimensional observation information expressing at least one moving body observed in a dynamic environment from a viewpoint of a robot that is equipped with an observation device;

a generating section generating bird's-eye view data, which expresses an on-ground locus of movement of the robot and on-ground loci of movement of respective moving bodies that are obtained in a case in which the robot is observed from a bird's-eye view position, from the time-series data of the two-dimensional observation information and by using a motion model, which is determined in advance and expresses motions of the moving bodies, and relative positions of the moving bodies from the robot in an actual space, which relative positions are determined by using prior information, which relates to sizes of the moving bodies in an actual space, and sizes and positions of the moving bodies in the two-dimensional observation information;

an autonomous traveling section causing the robot to travel autonomously; and

a control section that, by using the bird's-eye view data, controls the autonomous traveling section such that the robot moves to a destination.

# FIG.1

# FIG.2

# FIG.3

# FIG.4

# FIG.5

20,220

| 61 | 62 | 63 |
|---|---|---|
| CPU | ROM | RAM |

66

| 64 | 65 |
|---|---|
| STORAGE | COMMUNICA-TION I/F |

# FIG.6

START

ACQUIRE TIME-SERIES
DATA OF IMAGES ～S100

DETECT AND TRACK
RESPECTIVE PERSONS ～S102

SET INITIAL VALUES ～S104

ESTIMATE ROBOT POSITION
AND IMAGING DIRECTION ～S106

ESTIMATE POSITIONS
OF RESPECTIVE PERSONS ～S108

S110

N ← END REPEATING?

Y

OUTPUT BIRD'S-EYE VIEW DATA ～S112

END

# FIG.7

200

220

10

CAMERA

ACQUIRING
SECTION — 22

TRACKING
SECTION — 24

GENERATING
SECTION — 26

250

OUTPUTTING
SECTION

# FIG.8

# FIG.9

# FIG.10

FIG.11

## INTERNATIONAL SEARCH REPORT

| | International application No. |
|---|---|
| | **PCT/JP2022/037139** |

**A. CLASSIFICATION OF SUBJECT MATTER**

*H04N 7/18*(2006.01)i; *G05D 1/02*(2020.01)i; *G06T 7/20*(2017.01)i
FI: H04N7/18 K; G05D1/02 J; G06T7/20 100

According to International Patent Classification (IPC) or to both national classification and IPC

**B. FIELDS SEARCHED**

Minimum documentation searched (classification system followed by classification symbols)

H04N7/18; G05D1/02; G06T7/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-213039 A (UNIV. OF TOKYO) 12 December 2019 (2019-12-12)<br>entire text, all drawings | 1-10 |
| A | WO 2021/095463 A1 (OMRON CORP.) 20 May 2021 (2021-05-20)<br>entire text, all drawings | 1-10 |
| A | WO 2021/095464 A1 (OMRON CORP.) 20 May 2021 (2021-05-20)<br>entire text, all drawings | 1-10 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/037139**

| Patent document cited in search report | | | Publication date (day/month/year) | Patent family member(s) | | | Publication date (day/month/year) |
|---|---|---|---|---|---|---|---|
| JP | 2019-213039 | A | 12 December 2019 | (Family: none) | | | |
| WO | 2021/095463 | A1 | 20 May 2021 | CN entire text, all drawings | 114698388 | A | |
| WO | 2021/095464 | A1 | 20 May 2021 | CN entire text, all drawings | 114667494 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021077287 A

- JP 2021177665 A

**Non-patent literature cited in the description**

- *MonoLoco: Monocular 3D Pedestrian Localization and Uncertainty Estimation,* June 2019, https://arxiv.org/abs/1906.06059

- *Monocular 3D Object SLAM,* June 2018, https://arxiv.org/abs/1806.00557
- *CubeSLAM: Monocular 3D Object SLAM,* June 2018, https://arxiv.org/abs/1806.00557